# FASCICULE DE BREVET EUROPEEN

(11) **EP 1 691 653 B1**
(45) Date de publication et mention de la délivrance du brevet: **20.08.2008**
(21) Numéro de dépôt: 04805621.2
(22) Date de dépôt: 02.12.2004
(51) Int. Cl.: A47J 45/06

(54) **SYSTEME DE FIXATION D'UNE POIGNEE DE PREHENSION A UN RECIPIENT D'UN ARTICLE CULINAIRE**
SYSTEM ZUM ANBRINGEN EINES HANDGRIFFS AN EINEM KOCHGESCHIRRBEHÄLTER
SYSTEM FOR FIXING A GRIP HANDLE TO A COOKWARE CONTAINER

(30) Priorité: 12.12.2003 FR 0314572
(43) Date de publication de la demande: 23.08.2006
(73) Titulaire: SEB SA, 69130 Ecully (FR)
(72) Inventeur: MAZIN, Cédric, 74540 Alby sur Chéran (FR)
(74) Mandataire: Lemoine, Jean-Sébastien
(86) Numéro de dépôt international: PCT/FR2004/003102
(87) Numéro de publication internationale: WO 2005/065508

(56) Documents cités:
- EP-A- 1 304 065
- AU-A- 1 079 570
- DE-U- 9 100 908
- GB-A- 1 555 031

## Description

La présente invention concerne un système de fixation d'une poignée de préhension à un récipient d'un article culinaire tel qu'une casserole, une sauteuse, un faitout, une poêle...

On connait un tel système du type comprenant un goujon qui comporte un corps adapté à être fixé au récipient, et un pare-flamme qui est adapté à entourer le goujon et qui comporte une paroi latérale et un épaulement annulaire faisant saillie de la paroi latérale vers l'intérieur et délimitant une ouverture au travers de laquelle s'étend le goujon.

Le document GB 1 555 031 divulgue un tel système de fixation. Lors du rapprochement et de la fixation de la poignée par le serrage d'une vis (traversant une ouverture de la poignée) dans un orifice fileté du goujon, le pare-flamme est entraîné par la poignée et il vient en butée contre le récipient. Dans le cas où un couple de serrage trop important est appliqué à la vis, la pression exercée par l'extrémité de la paroi latérale du pare-flamme adjacente au récipient sur la paroi latérale du récipient peut être telle que cette dernière se déforme. Aussi, volontairement, les couples de serrage appliqués aux vis de fixation sont assez faible (de l'ordre de 2 Nm), ce qui peut entraîner à long terme un dévissage.

Le problème posé est de réaliser un système de fixation pouvant supporter un couple de serrage important sans qu'il n'y ait de risque de déformation du récipient.

Selon l'invention, dans le système de fixation du type précité, le goujon comprend une collerette annulaire qui fait saillie du corps vers l'extérieur, la distance séparant la collerette annulaire de l'extrémité du corps adaptée à être fixée au récipient et celle séparant l'épaulement annulaire de l'extrémité de la paroi latérale adaptée à venir en contact avec le récipient sont telles que, lors du rapprochement de la poignée au récipient, l'épaulement annulaire vient en butée contre la collerette juste avant que l'extrémité de la paroi latérale du pare-flamme vienne en butée avec le récipient.

Ainsi, lors du rapprochement de la poignée au récipient, le pare-flamme vient en butée contre le goujon avant de venir en contact avec le récipient, de ce fait la paroi latérale de ce dernier n'est pas déformée. Afin que le pare-flamme joue son rôle, lors de la mise en butée de l'épaulement à la collerette, l'extrémité de la paroi latérale du pare-flamme est presque en contact avec le récipient, et en imposant un couple de vissage plus important, l'épaulement se déforme légèrement, de sorte que l'extrémité de la paroi latérale du pare-flamme vient en contact contre le récipient. En conséquence, la paroi latérale du récipient n'est pas déformée, même si un fort couple de serrage est appliqué à la vis (jusqu'à 8 Nm).

D'autres avantages et particularités de la présente invention apparaitront dans la description du mode de réalisation particulier donné à titre d'exemple et illustré par les dessins mis en annexes.

L'unique figure représente une vue en coupe partielle d'un ustensile culinaire au niveau du système de fixation conforme à la présente invention.

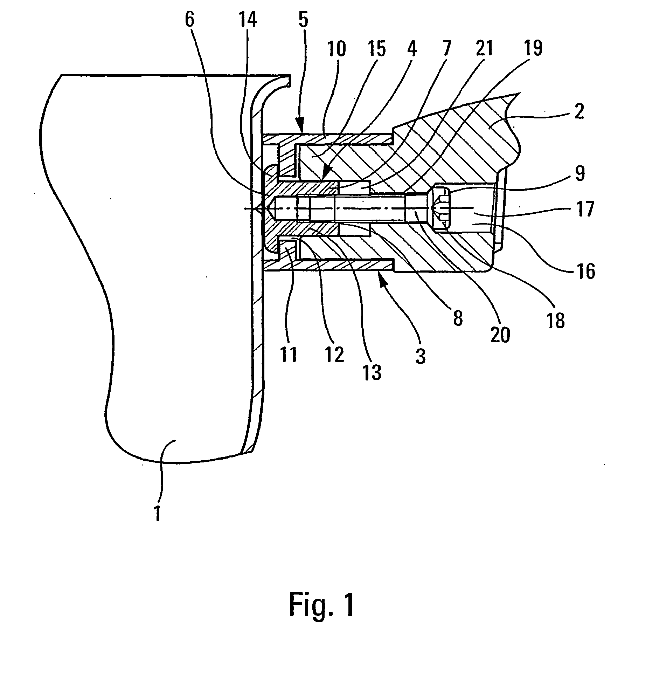

Comme on peut le voir à la figure 1, un article culinaire comprend un récipient 1, une poignée de préhension 2 et un système de fixation 3 de la poignée 2 sur le récipient 1.

Le système de fixation 3 comprend un goujon 4 et un pare-flamme 5. Le goujon 4 est adapté à être fixé au récipient 1 par une première extrémité 6 et comporte, à une deuxième extrémité 7, opposée à la première extrémité 6, un orifice 8 permettant le rapprochement et la fixation de la poignée 2 au récipient 1 par coopération avec un moyen de serrage 9 (en l'occurrence, une vis de serrage 9). Le pare-flamme 5 comporte une paroi latérale 10 qui est adaptée à entourrer le goujon 4 et qui permet de protéger l'extrémité de la poignée 2 proche du récipient 1 des flammes.

Comme on peut le voir à la figure, le pare-flamme 5 comprend également un épaulement annulaire 11 qui est solidaire de la paroi latérale 10 et qui fait saillie radialement de celle-ci vers l'intérieur, délimitant une ouverture 12 au travers duquel s'étend le goujon 4. Dans le présent exemple, l'épaulement annulaire 11 est monobloc avec la paroi latérale 10.

Dans le présent exemple, le goujon 4 comprend un corps 13 portant la première extrémité 6 par laquelle il est soudé au récipient 1. Il comprend également une collerette annulaire 14 qui est solidaire du corps 13 et qui fait saillie radialement de celui-ci vers l'extérieur. Dans le présent exemple, la collerette annulaire 14 est monobloc avec le corps 13. De plus, la collerette 14 s'étend depuis la première extrémité 6 du goujon 4.

Par ailleurs, la poignée 2 comprend une première extrémité 15 qui est adaptée à être disposée à l'intérieur de la paroi latérale 10 du pare-flamme 5 quand elle est fixée au récipient 1.

La vis 9 est introduite à partir d'une ouverture 16 traversant la première extrémité 15 puis l'orifice fileté 8 du goujon 4. L'ouverture 16 présente une première partie 17 ayant un certain diamètre permettant le passage de la tête 18 de la vis 9, puis, dans le prolongement, une deuxième partie 19 dont le diamètre correspond sensiblement au cylindre 20 de la vis 9, et enfin, toujours dans le prolongement, une troisième partie 21 dont le diamètre est supérieur à celui de la deuxième partie 19 et permet de recevoir le goujon 4. Par effet du vissage, la poignée 2 est rapprochée du récipient 1 et la partie du goujon 4 portant l'orifice 8 pénètre dans la troisième partie 21 jusqu'à ce que l'épaulement annulaire 11 vient en butée contre la collerette annulaire 14.

Quand l'épaulement annulaire 11 vient en butée contre la collerette annulaire 14, l'extrémité de la paroi latérale 10 opposée à la poignée est très proche du récipient 1, et en continuant le vissage, l'épaulement annulaire 11 se déforme de sorte que cette extrémité vient en contact avec le récipient 1. Il est ainsi possible d'appliquer un couple de serrage à la vis de l'ordre de 8 Nm.

La rigidité du pare-flamme 5 est fonction de la matière constituant l'épaulement et de son épaisseur.

Bien évidemment, le présent mode de réalisation n'est qu'un exemple et de nombreuses modifications peuvent y être apportées.

Il serait ainsi possible que l'épaulement annulaire et la paroi latérale soit deux pièces distinctes pouvant être assemblées l'une à l'autre. De même pour la collerette annulaire et le corps du goujon.

Il serait aussi possible que la collerette ne s'étende pas depuis la première extrémité du corps.

## Revendications

1. Système de fixation (3) d'une poignée de préhension (2) à un récipient (1) d'un article culinaire comprenant un goujon (4) qui comporte un corps (13) adapté à être fixé au récipient (1), et un pare-flamme (5) qui est adapté à entourer le goujon (4) et qui comporte une paroi latérale (10) et un épaulement annulaire (11) faisant saillie de la paroi latérale (10) vers l'intérieur et délimitait une ouverture (16) au travers de laquelle s'étend le goujon (4), **caractérisé en ce que** le goujon (4) comprend une collerette annulaire (14) qui fait saillie du corps (13) vers l'extérieur, la distance séparant la collerette annulaire (14) de l'extrémité (6) du corps (13) adaptée à être fixée au récipient (1) et celle séparant l'épaulement annulaire (11) de l'extrémité de la paroi latérale (10) adaptée à venir en contact avec le récipient (1) sont telles que, lors du rapprochement de la poignée (2) au récipient (1), l'épaulement annulaire (11) vient en butée contre la collerette (14) juste avant que l'extrémité de la paroi latérale (10) du pare-flamme (5) vienne en butée contre le récipient (1).

2. Système de fixation (3) selon la revendication 1, **caractérisé en ce que** l'épaulement annulaire (11) est monobloc avec des parois latérales (10) du pare-flamme (5).

3. Système de fixation (3) selon la revendication 1 ou 2, **caractérisé en ce que** la collerette annulaire (14) est monobloc avec un corps (13) du goujon (4).

4. Système de fixation (3) selon l'une des revendications 1 à 3, **caractérisé en ce que** la collerette annulaire (14) est située à l'extrémité (6) du goujon (4) adaptée à être fixée au récipient (1).

5. Article culinaire comprenant un récipient (1), une poignée de préhension (2) et un système de fixation (3) de la poignée (2) au récipient (1) conforme à l'une des revendicaitons 1 à 4.

## Claims

1. A system (3) for fixing a grip handle (2) to a container (1) of an item of cookware comprising a stud (4) which comprises a body (13) adapted to be fixed to the container (1), and a flame guard (5) which is adapted to surround the stud (4) and which comprises a side wall (10) and an annular shoulder (11) projecting from the side wall (10) to the interior and defining an opening (16) through which extends the stud (4), **characterised in that** the stud (4) comprises a flange ring (14) which projects from the body (13) to the exterior, the distance separating the flange ring (14) from the end (6) of the body (13) adapted to be fixed to the container (1) and that separating the annular shoulder (11) from the end of the side wall (10) adapted to come into contact with the container (1) are such that, when the handle (2) approaches the container (1), the annular shoulder (11) abuts against the flange ring (14) just before the end of the side wall (10) of the flame guard (5) abuts against the container (1).

2. The system of fixing (3) as claimed in Claim 1, **characterised in that** the annular shoulder (11) is monobloc with the side walls (10) of the flame guard (5).

3. The system of fixing (3) as claimed in Claim 1 or 2, **characterised in that** the flange ring (14) is monobloc with a body (13) of the stud (4).

4. The system of fixing (3) as claimed in any one of Claims 1 to 3, **characterised in that** the flange ring (14) is located at the end (6) of the stud (4) adapted to be fixed to the container (1).

5. An item of cookware comprising a container (1), a grip handle (2) and a system (3) for fixing the handle (2) to the container (1) as claimed in any one of Claims 1 to 4.

## Patentansprüche

1. Befestigungssystem (3) für einen greifbaren Griff (2) an einem Behälter (1) eines Küchenartikels umfassend einen Bolzen (4), welcher einen Körper (113) aufweist, der dazu ausgelegt ist, an dem Behälter (1) befestigt zu werden, und eine Flammensicherung (5), die dazu ausgelegt ist, den Bolzen (4) zu umgeben und die aufweist eine laterale Wand (10) und einen ringförmigen Vorsprung (11) bildend eine innengerichtete Auskragung der lateralen Wand (10), begrenzend eine Öffnung (16) durch die sich mittig der Bolzen erstreckt (4),
**dadurch gekennzeichnet, dass** der Bolzen (4) eine ringförmige Krause (14) umfasst, , die eine Auskragung des Körpers (13) nach außen bildet, der Abstand trennend die ringförmige Krause (14) von dem Endstück (6) des Körpers (13) dazu ausgelegt, an dem Behälter (1) befestigt zu sein, und der Abstand trennend den ringförmige Vorsprung (11) von dem Endstück der lateralen Wand (10), dazu ausgelegt, mit dem Behälter (1) in Kontakt zu kommen, sind so ausgestaltet, dass bei der Annäherung des Griffes (2) an den Behälter (1), der ringförmige Vorsprung (11) in Anschlag kommt mit der Krause (14), kurz bevor das Endstück der lateralen Wand (10) der Flammensicherung (5) mit dem Behälter (1) in Kontakt kommt.

2. Befestigungssystem (3) nach Anspruch 1, **dadurch gekennzeichnet, dass** der ringförmige Vorsprung (11) einstückig mit der lateralen Wand (10) für die Flammensicherung (5) ausgebildet ist.

3. Befestigungssystem (3) nach Anspruch 1 oder 2, **dadurch gekennzeichnet, dass** die ringförmige Krause (14) einstückig mit einem Körper (13) des Bolzen (4) ausgebildet ist.

4. Befestigungssystem (3) nach einem der Ansprüche 1 bis 3, **dadurch gekennzeichnet, dass** die ringförmige Krause (14) sich an dem Endstück (6) des Bolzens (4), ausgebildet zur Befestigung an dem Behälter (1), befindet.

5. Küchenartikel umfassend einen Behälter (1), einen greifbaren Griff (2) und ein Befestigungssystem (3) des Griffs (2) an dem Behälter (1) entsprechend einem der Ansprüche 1 bis 4.
